# EUROPEAN PATENT SPECIFICATION

(11) **EP 2 213 536 B1**
(45) Date of publication and mention of the grant of the patent: **09.03.2011**
(21) Application number: 09001350.9
(22) Date of filing: 30.01.2009
(51) Int. Cl.: B60T 8/32, B60T 8/26, B62L 3/00

(54) **Motorcycle having a particular arrangement of a battery and an ABS unit**
Motorrad mit spezieller angeordneter Batterie und ABS-Einheit
Motocyclette avec un arrangement particulier de batterie et d'unité ABS

(43) Date of publication of application: 04.08.2010
(73) Proprietor: YAMAHA MOTOR EUROPE N.V., 1119 NC Schiphol-Rijk (NL)
(72) Inventor: Suzuki, Masahiro, 20146 Milano (IT); Tisci, Riccardo, Pogliano, M.se (MI) 20046 (IT); Losantos, Josep, 08013 Barcelona (ES)
(74) Representative: Grünecker, Kinkeldey, Stockmair & Schwanhäusser Anwaltssozietät

(56) References cited:
- EP-A- 1 568 561
- EP-A- 1 679 243
- FR-A- 2 738 204
- JP-A- 10 160 641
- JP-A- 10 181 546
- JP-A- 11 314 589
- JP-A- 2002 067 913

## Description

The present invention relates to the field of motorcycles. In particular, the present invention relates to the way component parts of said motorcycle are located, shaped and/or reciprocally disposed. In more detail, the present invention relates to the location and/or shape and/or reciprocal disposition of at least the battery and the ABS unit.

As it is well known in the automotive field, many motorcycles (even motorcycles of reduced dimensions and offering contained performances in terms of speed or the like) are equipped with an hydraulic control unit (in the following also referred to as ABS unit) belonging to a main antilock brake system. This in particular applies to usual motorcycles, such as, for instance, two-wheeled motorbikes and/or other 3 or four wheeled motorcycled such as choppers, quads or the like. Usually, electrical current is supplied to the ABS unit by means of an accumulator or battery; furthermore, to this end, a wiring system is provided (comprising electrical cables, switches or the like) for electrically connecting said ABS unit to said battery. Accordingly, a convenient layout has to be found for said ABS unit, said battery and said wiring system. However, experience has revealed that finding a convenient location for both the ABS unit and the battery represents quite a difficult task; moreover, further problems are usually encountered during design of the wiring system, in particular for finding a convenient path for the electrical cables. One of the reasons for that relates to the fact that the location of said battery and said ABS unit, as well as that of the electrical cables, influence the overall dimensions and layout of the motorcycle. For instance, a battery located in a position such that said battery can be viewed (for instance in a position not hidden or covered by the cover assembly of the motorcycle) strongly influences the overall look of the motorcycle; accordingly, attempts are usually made to find solutions allowing to locate said battery under said cover assembly (under portions thereof) so as to be hidden by said cover assembly. However, space under the cover assembly is usually reduced so that difficulties are encountered in implementing this solutions; this in particular applies in the case of big or cumbersome batteries such as those needed in the case of high-performances motorcycles. The same considerations as stated above also apply to other component parts of a motorcycle, such as, for instance the ABS unit; finding a convenient location for the ABS unit, in particular under the cover assembly of a motorcycle, may indeed pose several problems. A further aspect to be taken into consideration during the design of a motorcycle relates to the fact that, once a convenient location for one of the battery and the ABS unit has been found, the other of said battery and said ABS unit should not be located too far away from either said battery or said ABS unit. The reason for that relates to the need of providing a wiring system for electrically connecting said battery to said ABS unit; however, a big distance between the battery and the ABS unit results in electrical cable of increased length. The further problem has therefore to be faced of finding a convenient path for said cables of increased length. Moreover, in the case of electrical cables of increased length, fixation means such as, for instance, clips have to be provided for fixing said electrical cables, for instance to the main frame or other component parts of the motorcycle, so as to improve the stability and resistance of said cables, thus avoiding damages and/or that the cables get disconnected due for instance to vibrations or the like. Again, finding a convenient location, in particular finding enough space for said fixation means may also become troublesome or difficult. Moreover, electrical cables of increased length and extending along a non linear path, usually mean that difficulties are encountered during assembly and fixation of said cables and/or of said fixing means, resulting in the duration of the assembly operation unduly increasing with evident disadvantages in terms of increasing costs. Furthermore, in case of a failure, for instance due to interruption or disconnection of one or more cables, finding the failure along the cables path and repairing same could become difficult and/or troublesome, resulting in the maintenance costs also unduly increasing. As to the ABS unit, it has to be noted that hydraulic pipes, valves or the like also need to be provided, for instance for connecting said unit to the brake system (the caliper thereof). A convenient path and location for said hydraulic pipes and valves or the like has therefore also to be found.

In an attempt to meet as many as possible of the criteria and/or requirements outlined above, several solutions have been proposed in recent years by the manufacturers of motorcycles. In particular, according to a known solution disclosed in Japanese Patent Application Laid-Open Publication No. 11-314589, which discloses a motorcycle according to the preamble of claim 1, to the preamble of claim 1; it has been proposed locating the ABS unit in proximity of the head pipe (the pipe supporting the front fork) of the main frame of the motorcycle; in particular, according to this known solution, the ABS unit is located in front of said head pipe and is fixed thereto by means of an elastic bracket. This allows to better use the space in proximity of the head pipe where usually only few component parts are located. However, since still according to this solution the battery is located below the footboards (offering support for the feet of the driver) many of the problems identified above still arise, due for instance to the increased distance between the ABS unit and the battery.

Therefore, it results from the above that in spite of all the efforts made, the solutions proposed in the past and known in the prior art do not always meet all the essential requirements which have to be taken into consideration during the design of a motorcycle. In particular, the proposed solutions do not meet the need according to which at least the ABS unit and the battery have to be reciprocally disposed according to a layout offering a good performance in terms of simplified, quick and reliable assembly and maintenance operations, in terms of electrical cables with reduced length and convenient or simplified path, as well as in terms of the overall look, appearance and contained dimensions of the motorcycle. In particular, the solutions proposed in the past do not meet the need of proposing an improved layout for both the ABS unit and the battery rendering said ABS unit and battery easily accessible but still allowing said ABS unit and battery to be conveniently hidden under the cover assembly of said motorcycle.

A further example of a layout relating to the reciprocal disposition of the battery and the ABS unit in a motorcycle is known from document FR2738204A. unit in a motorcycle is known from document FR2738204A

Accordingly, in view of the above, it is an object of the present invention to provide a motorcycle with an improved layout according to which at least two component parts of said motorcycle are conveniently located. In particular, it is an object of the present invention to propose an improved layout according to which at least the ABS unit and the battery of said motorcycle are conveniently located and/or shaped and/or reciprocally disposed. In more detail, a further object of the present invention is that of suggesting a motorcycle with an improved layout according to which at least the ABS unit and the battery are conveniently located so as to be easily accessible and so as to allow to contain the overall length of the wiring system or structure connecting them. A further object of the present invention is that of suggesting an improved layout according assembly and/or maintenance operations of said ABS unit and said battery, as well as of said wiring system are simplified and/or speeded up. The layout according to the present invention shall also allow for the containment of the overall dimension of the motorcycle and even for the improvement of its overall look and appearance. Moreover, both ABS unit and the battery shall be adequately protected.

In general terms, the present invention is based on the consideration that the problems affecting the prior art layouts relating to the battery and the ABS unit, as well as the wiring system therebetween may be overcome or at least strongly reduced by adequately locating said ABS unit and said battery. In particular, the problems affecting prior art layouts may be overcome or at least strongly reduced by locating the ABS unit and said battery close to each other and both in proximity of the head pipe of a motorcycle. In this case, the length of the electrical cables connecting said ABS unit to said battery can be reduced and the space in proximity of said head pipe can be conveniently used. Moreover, since the ABS unit and the battery are located close to each other, said ABS unit and said battery are easily accessible so that, for instance, assembly and maintenance operations are simplified. Moreover, in the case in which said ABS unit and said battery are located under the cover assembly of the motorcycle (under the front portion thereof), both said ABS unit and said battery result to be adequately protected. A further consideration upon which the present invention is based relates to the fact that space in proximity of said head pipe can be even more conveniently used by disposing one of the ABS unit and the battery in front of said head pipe and the other of said ABS unit and battery on the side of said head pipe. Moreover, still according to the present invention, further advantages arise when said ABS unit and said battery are located so as to at least partially overlap each other when viewed from the side of the motorcycle.

Still additional advantages arise, according to the present invention, when one or more brackets are provided for fixing said ABS unit to said head pipe either separately or together. Finally, and still according to the present invention, further advantages arise when said one or more brackets are detachably fixed to said head pipe.

On the basis of the considerations as stated above, the above mentioned problems posed are overcome by the features stated in independent claim 1.

Further embodiments and/or features of the present invention are laid down in the dependent claims. Further advantages, objectives, features as well as further embodiments of the present invention will become more apparent with the following detailed description when taken with reference to the accompanying drawings, in which identical or corresponding parts are identified by the same reference numerals. In particular, in the drawings:
FIG. 1 is relates to a left side view of a motorcycle implementing the layout according to an embodiment of the present invention;
FIG. 2 relates to a perspective view showing a battery and an ABS unit of the motorcycle;
FIG. 3 relates to a front view still showing in particular the ABS unit and the battery disposed according to the layout of an embodiment of the present invention;
FIG. 4 is relates to a left side view still showing in particular the ABS unit and the battery disposed according to the layout of an embodiment of the present invention;
FIG. 5 relates to a right side view still showing in particular the ABS unit and the battery disposed according to the layout of an embodiment of the present invention;
FIG. 6 relates to a back view still showing in particular the ABS unit and the battery disposed according to the layout of an embodiment of the present invention.

While the present invention is described with reference to the embodiments as illustrated in the following detailed description as well as in the drawings, it should be understood that the following detailed description as well as the drawings are not intended to limit the scope of the present invention to the particular illustrated embodiments disclosed and/or depicted therein, but rather that the described illustrated embodiments merely exemplify the various aspects of the present invention, the scope of which is defined by the appended claims.

The present invention is understood to be of particular advantage when applied to two wheeled motorcycles, such as, for instance, motorbikes. For this reason, examples will be given in the following, in which corresponding embodiments of layout according to the present invention are applied to motorcycles. However, it has to be noted that the applications of the layout according to the present invention are not limited to the case of motorbikes; on the contrary, the inventive layout may also be applied to other motorcycles, in particular, to three or even four wheeled motorcycles such as, for instance, choppers, quads or the like.

In the following, details and features of the present invention will be described with reference to the drawings wherein corresponding or equivalent features are identified by corresponding reference numerals. Moreover, in both the drawings and the following disclosure, terms such as, for instance, front, rear, left and right have to be understood as meaning respectively front, rear, left and right as used from the perspective of the person sitting on the motorcycle implementing the present invention. Moreover, in the following description, two identical reference numerals are used for identifying "left and right" component parts, even if only one of said two components parts is depicted in the drawings; for instance, if the description refers to a right and a left cover, with only the left cover being depicted in the drawings, said left and right covers are identified by indicating the same reference numerals twice; in the same way, when the description refers to a component part identified by two identical reference numerals (for instance 19, 19), the description has to be understood as meaning that a left and a right component part are provided.

In the drawings, reference numeral 1 relates to a motorcycle with an improved layout according to the present invention; in particular, in the drawings there is depicted a so called maxi scooter. However, it appears clearly from the following disclosure that the applications of the present invention are not limited to the case of maxi scooters but comprise any kind of motorcycles.

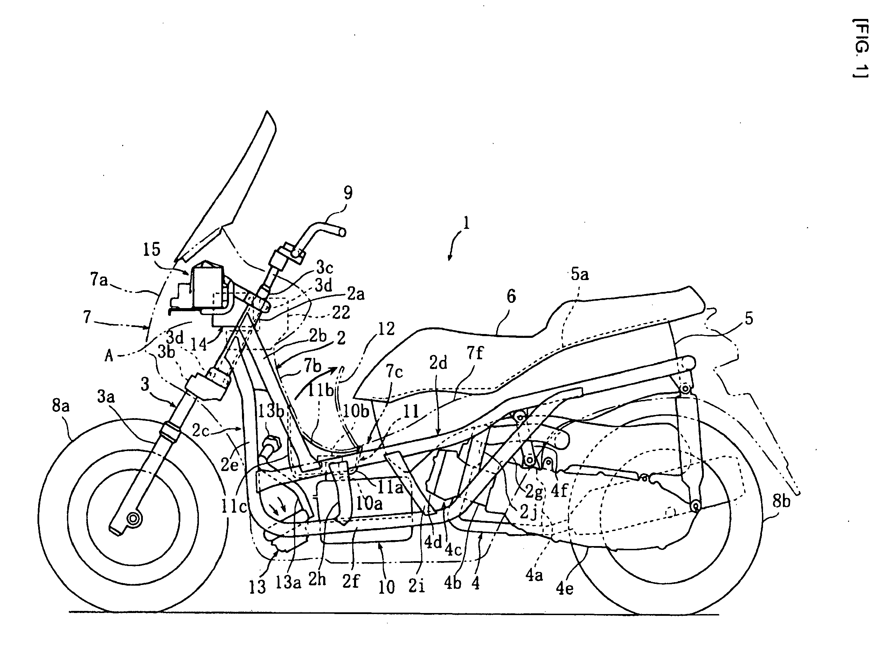

As apparent in particular from Figure 1, the motorcycle 1 comprises a body frame 2, (in the following also referred to as main frame) a front fork 3 supported by a head pipe 2a at a front end of the body frame 2, an engine unit 4 supported by a substantially central portion of the body frame 2, a housing box 5 (for instance for housing luggage or the like) located above the engine unit 4, a seat 6 disposed on said box 5 and pivotally mounted so as to allow to open and close an opening 5a of said housing box 5. The motorcycle 1 is covered or protected by a vehicle body cover 7 substantially surrounding the motorcycle 1.

The body frame 2 comprises left and right main tubes 2b, 2b connected to an upper portion of the head pipe 2a and extending therefrom, left and right down tubes 2c, 2c connected to a lower portion of the head pipe 2a and extending therefrom, along with left and right upper tubes (first and second frame members) 2d, 2d extending in a vehicle front-back direction.

Each of the down tubes 2c comprises a substantially vertical tube portion 2e extending downward from the head pipe 2a, a lateral tube portion 2f extending rearward from a lower end portion of the vertical tube portion 2e, and an inclined tube portion 2g extending rearward and diagonally upward from the lateral tube portion 2f. Front end portions of the upper tubes 2d, 2d are connected to lower portions of the vertical tube portions 2e, 2e, whilst rear end portions of the inclined tube portions 2g, 2g are connected to rear portions of the upper tubes 2d, 2d. The upper tube 2d, the lateral tube portion 2f, and the inclined tube portion 2g are connected by a plurality of connecting members 2h, 2i, and 2j, which confer high rigidity to the body frame 2.

The front fork 3 comprises left and right fork bodies 3a, 3a, a bracket 3b for coupling upper end portions of both the fork bodies 3a, 3a, and a steering shaft 3c standing on the bracket 3b and extending upward therefrom.

A front wheel 8a is pivoted on lower end portions of the left and right fork bodies 3a, 3a. The steering shaft 3c is received inside the head pipe 2a so as to be supported by the head pipe 2a in a way allowing said steering shaft to be steered leftward and rightward; in particular, to this end, a bearing 3d is provided (interposed between said steering shaft 3c and said head pipe 2a). A steering handlebar 9 is fixed to an upper end portion of the steering shaft 3c.

Although it is not shown in the drawings, a rear brake lever is disposed at a left end portion and a front brake lever is disposed at a right end portion of the steering handlebar 9. Rear and front master cylinders are coupled to the rear and front brake levers.

In the engine unit 4, a cylinder block 4b, a cylinder head 4c, and a head cover 4d are coupled to a front wall of a crankcase 4a; in the arrangement of Figure 1, the cylinder axes is oriented substantially horizontally. A transmission case 4e extending rearward is coupled to a left side of the crankcase 4a. An upper wall of the crankcase 4a is fixed to the upper tubes 2d by means of link members 4f supporting said crankcase 4a. A rear wheel 8b is rotatably supported by a rear end portion of the transmission case 4e; driving force is therefore transmitted from the crankcase 4a to the rear wheel 18 by means of the transmission case 4e.

A vehicle body cover 7 is further provided, with said body cover 7 surrounding the motorcycle 1; in particular, said vehicle body cover 7 (n the following also referred to as motorcycle body cover or simply as body cover) comprises a front cover 7a covering the head pipe 2a (and/or component parts or portions fixed to or supported by said head pipe 2a) from a front side, and a leg shield 7b for covering the head pipe 2a (and/or component parts or portions fixed to or supported by said head pipe 2a) from behind. Moreover, a center cover 7c covers the left and right upper tubes 2d, 2d and lateral tube portions 2f, 2f (and/or component parts or portions fixed to or supported by said tubes), whilst a rear cover 7f covers a lower portion of the seat 6 and lateral sides of the housing box 5.

According to the needs and/or circumstances, the rear cover 7f, the housing box 5, and the seat 6 can be fixed to each other so as to form a unique, unitized piece which can be mounted on and detached from the upper tubes 2d during a single, unique operation.

As apparent from Figure 1, a fuel tank 10 is installed in a space covered by the center cover 7c and defined, in the width direction of the motorcycle 1 (i.e. in a direction perpendicular to the plane of Figure 1), by the left and right upper tubes 2d, 2d and the left and right lateral tube portions 2f, 2f. A fuel filler tube or hose 10a is connected to an upper wall of the fuel tank main body 10 so as to extend from said upper wall in an upward direction or orientation.

The fuel filler tube 10a extends in particular through a bottom wall 11 a of a fuel receiving pan (in the following also referred to as fuel receiving member) 11 and protrudes upward; a fuel filler cap 10b is detachably attached to an upper end portion of the fuel filler tube 10a, thus allowing to open and to close, alternatively, said end portion (end port) of said fuel filler tube 10a. The fuel filler cap 10b is therefore received inside said fuel receiving cap 11.

In front of the fuel tank 10, a radiator 13 is disposed between upward bend portions of the left and right lateral tube portions 2f, 2f. A water filler hose 13a extends upward with the upper end portion of said water filler hose being fixed to the vertical tube portion 2e of the down tube 2c by a bracket 13c. To the upper end portion of the water filler hose 13a, a water filler cap 13b is detachably mounted. The water filler cap 13b is disposed below a lower end portion of the leg shield 7b.

A reservoir tank (not shown in the drawings) is disposed on the right of the fuel tank 10.

The reservoir tank is for receiving and storing coolant water exiting from the radiator 13 so as to compensate an increase in volume of coolant water in the radiator 13 due to expansion caused by a rise in temperature of said coolant water; at the same time, said reservoir tank allows coolant water to be supplied to said radiator 13 so as to compensate a decrease in volume of the coolant water in said radiator 13 due to contraction caused by fall in temperature. The water filler cap 13b is adapted to be detached or removed to replenish the radiator 13 with coolant water. As apparent from the drawings, the water filler cap 13b is positioned in front of and in close proximity to the fuel receiving pan 11. In particular, a front wall of said fuel receiving pan is interposed between said water filler cap 13b and said fuel filler cap 10b. Moreover, the fuel filler cap 10b and the water filler cap 13b are disposed between the left and right upper tubes (first and second frame members) 2d, 2d, and between the left and right lateral tube portions 2f, 2f, with the water filler cap 13b facing toward the front of the motorcycle, whilst the fuel filler cap 10b faces toward the rear of the motorcycle; in other words, the water filler cap 13b is located in a space in front of said fuel filler cap 10b in the vehicle front-back direction or even when viewed from the side of said motorcycle.

The fuel receiving pan 11 is provided for several purposes. For instance, said fuel receiving pan 11 allows to collect spilt fuel or fuel dropping from the fuel filling nozzle during refueling; moreover, said fuel receiving pan 11, (the front wall thereof), allows to alternatively expose and hide the fuel filler cap 10b. Moreover, said fuel receiving pan 11 allows to alternatively hide and expose the water filler cap 13b. Furthermore, said fuel receiving pan 11 is realized so as to allow to hide said water filler cap 13b whilst exposing, at the same time, said fuel filler cap 10b, as well as to expose said second cap whilst hiding at the same time said fuel filler cap 10b.

To this end, said fuel receiving pan 11 is in a box shape and comprises an opening at its upper end. According to the needs and/or circumstances, the fuel receiving pan 11 may made of an elastic material such as rubber or the like.

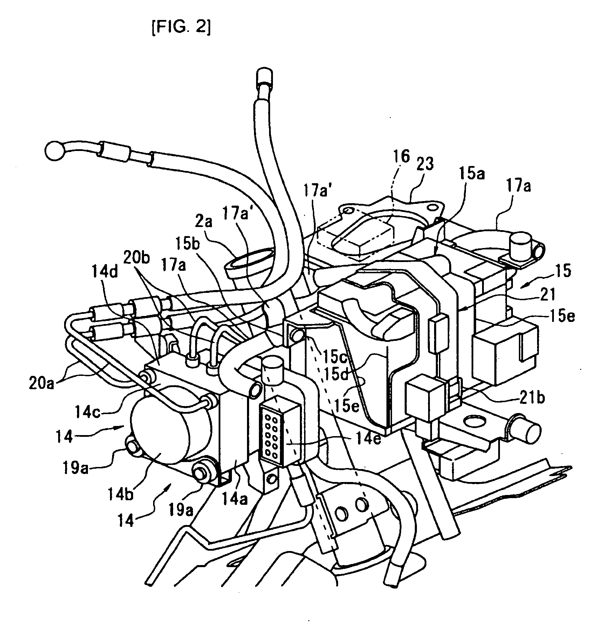

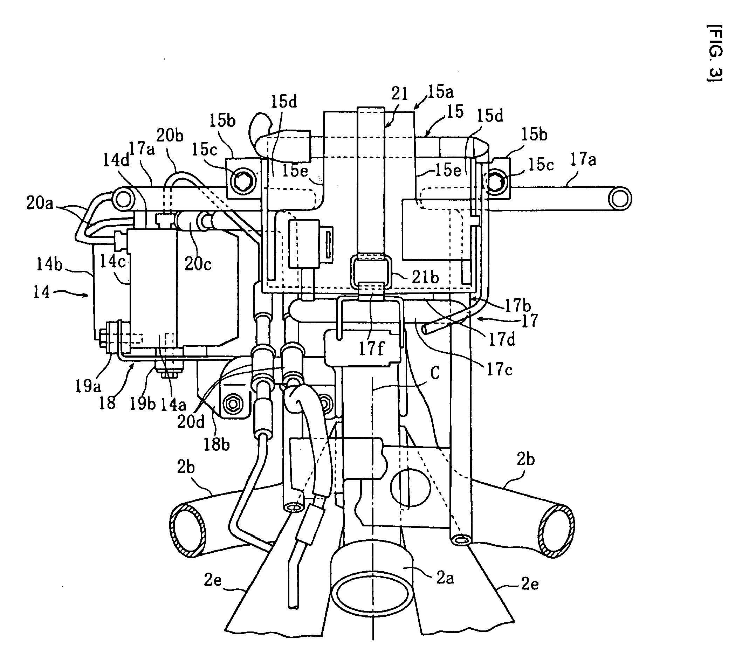

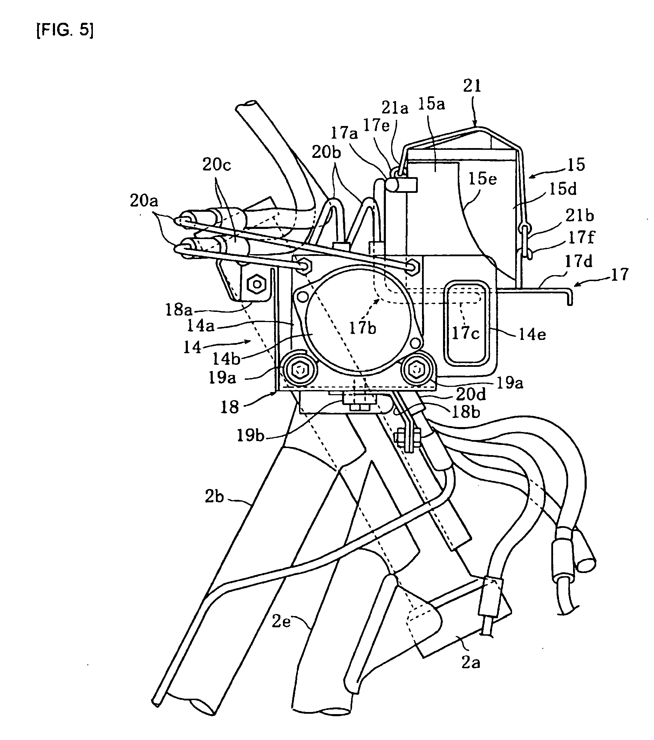

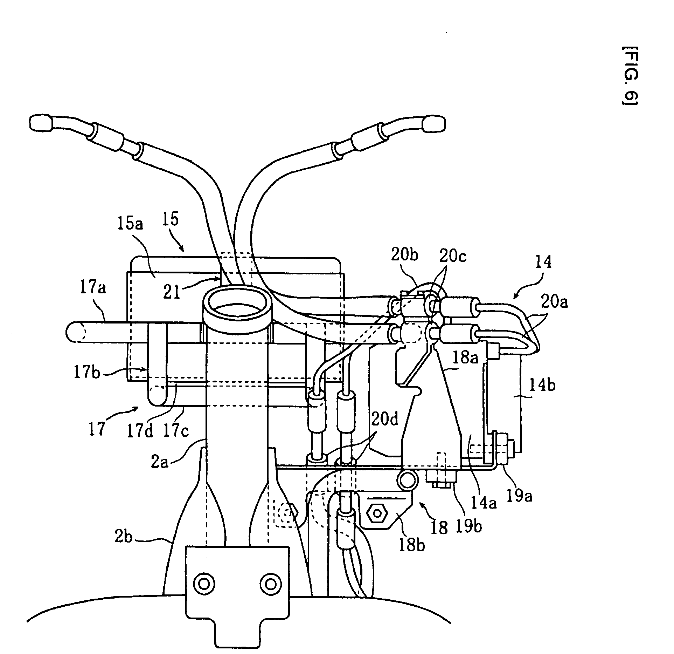

In the following, further details and/or features of the layout according to the present invention will be described with reference to Figures 2 to 6; in Figures 2 to 6, those features already explained above with reference to Figure 1 are identified by the same reference numerals.

As apparent from the drawings, the head pipe 2a is surrounded by the front cover 7a and the leg shield 7b in combination, and an ABS unit 14 and a battery 15 are disposed in a space A surrounded by said front cover 7a and said leg shield 7b. The ABS unit 14 is disposed to the right of the head pipe 2a, whilst the battery 15 is disposed in front of the head pipe 2a.

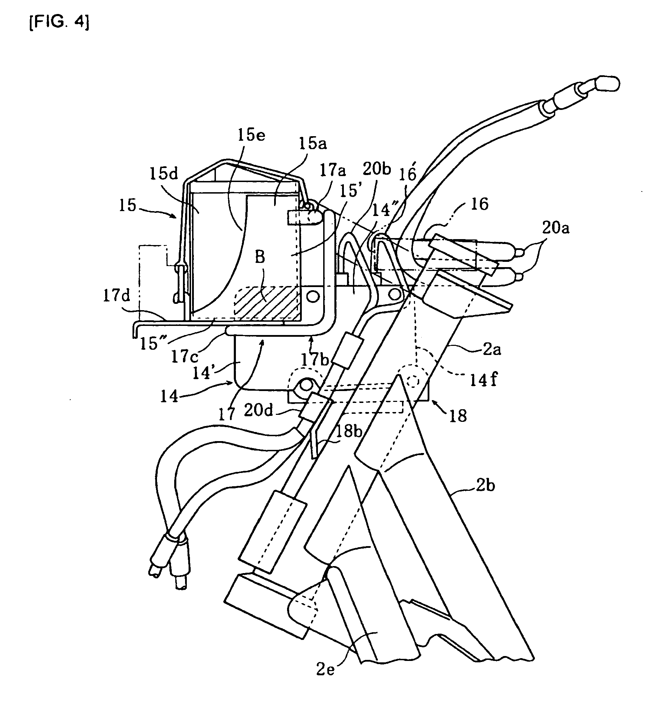

In particular, as viewed from a lateral side of the motorcycle, most of the ABS unit 14 (the most part or portion thereof, excluding a rear portion and a lower portion) is positioned more forward than the head pipe 2a; moreover, a rear portion and a lower portion of the battery 15, overlap with a front portion and an upper portion of the ABS unit 14 (the hatched portion B in FIG. 4).

Furthermore, a front end portion 14' of the ABS unit 14 is positioned more forward (when viewed from a side) than a rear end portion 15' of the battery 15; in the same way, an upper end portion 14" of the ABS unit 14 is positioned higher (at an higher position) than a lower end portion 15" of the battery 15. A housing portion 22 is provided to cover a back portion and a lower portion of the ABS unit 14.

The ABS unit 14 is disposed to the right of a vehicle central line C (or, in other words, of a longitudinal plane of symmetry) of the motorcycle 1, and an engine control unit (ECU) 16 is disposed to the left of said central line C or longitudinal plane of symmetry in a vehicle width direction. The ECU 16 is supported by a bracket 23 fixed to the battery bracket 17. As viewed from a lateral side of the motorcycle or vehicle, the ECU 16 is disposed so that its front end portion 16' is positioned more forward than a rear end portion 14f of the ABS unit 14.

The battery 15 is housed in a battery case 15a, said battery case 15a being placed and/or mounted on said battery bracket 17. The battery bracket 17 comprises bent tubular elements or tubes, in particular upper side tubular elements or tubes 17a, 17a having one end portions 17a', 17a' fixed to the head pipe 2a and extending leftward and rightward, along with a body portion or tubular element 17b formed into an L shape when viewed from a side and fixed to the upper side tubular elements or tubes 17a. A plate 17d is fixed to a lower side portion 17c of said tubular element 17b.

The battery case 15a is mounted on the plate 17d and left and right mount flange portions 15b, 15b of the battery case 15a are fixed to the left and right upper side portions 17a, 17a by bolts 15c, 15c.

The battery 15 is detachably fixed to the battery case 15a by means of a fixing band 21. One end portion 21 a of the fixing band 21 is fixed to a fixing portion 17e of the battery bracket 17 and a fixing ring 21 b mounted on the other end is detachably locked to a locking piece 17f arising from the plate 17d. At front left and right corner portions of the battery case 15a, notches and/or indentations 15e, 15e are formed for exposing left and right front corner portions 15d, 15d of the battery 15 outside. Said notches 15e, 15e help flowing air to directly blow on the battery, thus thereby securing cooling of the battery 15, with evident advantages in terms of improved performances of said battery.

The ABS unit 14 is detachably mounted on an ABS bracket 18 by means of rubber bushings 19a, 19a. The ABS bracket 18 is formed as a separate body from the battery bracket 17 and is fixed to the head pipe 2a.

The ABS unit 14 comprises a body portion 14a incorporating a control valve for switching on and off a flow path of a brake fluid, said flow path extending between a caliper side and a return side; a drive motor 14b disposed in the body portion 14a. The drive motor 14b is for driving an hydraulic pressure generating pump disposed in the body portion 14a. A connector 14e for controlling the supply of electrical power is disposed or located on an outer face of the body portion 14a in the vehicle width direction.

First end portions of said input pipes 20a, 20a are connected to a front face 14c of the body portion 14a, whilst second end portions of said input pipes 20a, 20a (opposite to said first end portions) are connected to the left and right master cylinders,(not shown in the drawings), respectively, mounted on the steering handlebar 9. Moreover, first end portions of output pipes 20b, 20b are connected to an upper face 14d of the body portion 14a, whilst second end portions of said output pipes 20b, 20b (opposite to said first portions)are connected to a front wheel caliper and a rear wheel caliper (not shown in the drawings), respectively. Said input pipes 20a, 20a, in proximity to their first end portions connected to the body portion 14a, are detachably fixed to an input support portion 18a of the ABS bracket 18 by means of input clamps 20c. Similarly, the output pipes 20b are detachably fixed to an output support portion 18b of the ABS bracket 18 by means of output clamps 20d.

According to the needs and/or circumstances, and still within the scope of the present invention, it is also possible to detachably mount the ABS bracket 18 on the head pipe 2a. In this case, the ABS unit 14 can be realized as a subassemblyin which the input pipes 20a and the output pipes 20b are stably and reliably supported, with evident advantages in terms of simplified assembly operations.

As clarified above, according to the embodiment of the present invention, the battery 15 is disposed in front of the head pipe 2a and the ABS unit 14 is disposed to the right of the head pipe 2a ; moreover, according to a further embodiment of the present invention, at least parts of the battery 15 and ABS unit 14 overlap each other as viewed from a lateral side of the motorcycle or vehicle.

In this way, it is possible to simplify the wiring structure extending between the battery 15 and the ABS unit 14. In particular, it is possible to avoid that the overall length of said wiring structure unduly increases; moreover, it is possible to control or drive said ABS unit by means of a main switch.

According to still a further embodiment of the present invention, the battery 15 is disposed in front of the head pipe 2a and the ABS unit 14 is disposed so that the most part thereof is positioned more forward than the head pipe 2a; by means of this solution, the space behind said ABS unit and/or said head pipe can be conveniently used, for instance for disposing the housing portion 22 and/or a convenient legroom is left to the driver.

Still according to a further embodiment of the present invention, both of the battery bracket 17 for supporting the battery 15 and the ABS bracket 18 for supporting the ABS unit 14 are fixed to the head pipe 2a; accordingly, it is possible to configure said brackets so as to allow the battery 15 and the ABS unit 14 to be located as close as needed to the head pipe 2a.

Moreover, in the case in which the battery bracket 17 and the ABS bracket 18 are formed as separate bodies, it is possible to select the positions at which both said brackets are disposed according to the needs and(or circumstances.

Moreover, with the ABS unit 14 being disposed to the right of the vehicle central line C and the ECU 16 being disposed to the left of the central line C, and eventually with the front end portion 16' of the ECU 16 being positioned more forward than the rear end portion 14f of the ABS unit 14, further advantages are obtained; for instance, it is possible to use space in a convenient and efficient way and to dispose these parts compactly.

Furthermore, with the front end portion 14' of the ABS unit 14 being positioned more forward than the rear end 15' of the battery 15, and eventually with the upper end portion 14" of the ABS unit 14 being positioned higher than the lower end portion 15" of the battery 15, the housing portion 22 can be shaped and realized so as to cover the rear portion and the lower portion of the ABS unit 14; moreover, it is possible to secure space for housing the ABS unit 14.

It arises therefore from the above disclosure that the present invention allows for overcoming or at least for strongly reducing the problems affecting the prior art layouts.

While the present invention has been described with reference to the particular embodiments depicted in the drawings, it has to be understood that the present invention is not limited to the particular embodiments described.

For instance, although the case in which the ABS unit is disposed on one side of the head pipe 2a and the battery is disposed in front of the head pipe 2a has been described above, the present invention is for covering also the case according to which it is the battery that is disposed the battery on one side of the head pipe 2a, whilst the ABS unit is located in front of the head pipe 2a.

The scope of the present invention is therefore defined by the appended claims.

## Claims

1. A motorcycle (1) comprising:
a body frame (2) comprising a head pipe (2a) supporting a front fork; a battery (15) and an ABS unit (14) supported by said body frame (2), wherein said ABS unit (14) is diposed on a lateral side of said head pipe (2a)
**characterized in that**
said battery (15) is disposed in front of said head pipe (2a) when viewed from above and **in that** at least parts of said ABS unit (14) are positioned more forward than said head pipe (2a) so as to overlap said head pipe (2a) as viewed from a lateral side of said motorcycle.

2. A motorcycle as claimed in claim 1, **characterized in that** said battery (15) and said ABS unit (14) at least partially overlap each other as viewed from a lateral side of the said motorcycle.

3. A motorcycle as claimed in one of claims 1 and 2, **characterized in that**, said motorcycle comprises at least one bracket fixed to said head pipe (2a) and supporting said battery (15) and said ABS unit (14).

4. A motorcycle as claimed in claim 3, **characterized in that** said motorcycle comprises a first battery bracket (17) fixed to said head pipe (2a) and supporting said battery (15) and at least a second ABS bracket (18) fixed to said head pipe (2a) and supporting said ABS unit.

5. A motorcycle as claimed in one of claims 3 and 4, **characterized in that** at least one of said brackets is detachably fixed to said head pipe (2a).

6. A motorcycle as claimed in one of claims 4 and 5, **characterized in that** said first battery bracket (17) comprises a head pipe connection portion fixed to said head pipe (2a) on a side opposite to said ABS unit (14).

7. A motorcycle as claimed in one of claims 1 to 6, **characterized in that**, said ABS unit (14) is disposed on one side of the longitudinal plane of symmetry of said motorcycle and **in that** an engine control unit (16) is disposed on the other side of said longitudinal plane of symmetry.

8. A motorcycle as claimed in claim 7, **characterized in that** a front end of said engine control unit (16) is disposed more forward than a rear end of said ABS unit (14).

9. A motorcycle as claimed in one of claims 1 to 8, **characterized in that** an upper end of said ABS unit (14) is positioned higher than a lower end of said battery (15), and **in that** a housing portion is formed to cover a rear portion and a lower portion of said ABS unit (14).

10. A motorcycle as claimed in one of claims 1 to 9, **characterized in that** said motorcycle comprises a vehicle body cover (7) comprising a front cover (7a) covering said head pipe (2a) from the front side and a leg shield (7b) covering said head pipe (2a) from behind, and **in that** said battery (15) and said ABS unit (14) are located in a space (A) defined by said front cover (7a) and said leg shield (7b).

## Patentansprüche

1. Motorrad (1), das umfasst:
ein Karosseriegerippe (2), das ein Kopfrohr (2a) umfasst, das eine Vorderradgabel trägt;
eine Batterie (15) und eine ABS-Einheit (14), die von dem Karosseriegerippe (2) getragen werden, wobei die ABS-Einheit (14), von oben gesehen, an einer Längsseite des Kopfrohrs (2a) angeordnet ist,
**dadurch gekennzeichnet, dass**
die Batterie (15), von oben gesehen, vor dem Kopfrohr (2a) angeordnet ist, und **dadurch**, dass wenigstens Teile der ABS-Einheit (14) weiter vorn positioniert sind als das Kopfrohr (2a), so dass sie das Kopfrohr (2a), von einer Längsseite des Motorrades her gesehen, überdecken.

2. Motorrad nach Anspruch 1, **dadurch gekennzeichnet, dass** die Batterie (15) und die ABS-Einheit (14) einander, von einer Längsseite des Motorrades her gesehen, wenigstens teilweise überdecken.

3. Motorrad nach einem der Ansprüche 1 und 2, **dadurch gekennzeichnet, dass** das Motorrad wenigstens eine Halterung umfasst, die an dem Kopfrohr (2a) befestigt ist und die Batterie (15) sowie die ABS-Einheit (14) trägt.

4. Motorrad nach Anspruch 3, **dadurch gekennzeichnet, dass** das Motorrad eine erste, eine Batterie-Halterung (17), die an dem Kopfrohr (2a) befestigt ist und die Batterie (15) trägt, und wenigstens eine zweite, eine ABS-Halterung (18) umfasst, die an dem Kopfrohr (2a) befestigt ist und die ABS-Einheit trägt.

5. Motorrad nach einem der Ansprüche 3 und 4, **dadurch gekennzeichnet, dass** wenigstens eine der Halterungen lösbar an dem Kopfrohr (2a) befestigt ist.

6. Motorrad nach einem der Ansprüche 4 und 5, **dadurch gekennzeichnet, dass** die erste Batteriehalterung (17) einen Kopfrohr-Verbindungsabschnitt umfasst, der an dem Kopfrohr (2a) an einer der ABS-Einheit (14) gegenüberliegenden Seite befestigt ist.

7. Motorrad nach einem der Ansprüche 1 bis 6, **dadurch gekennzeichnet, dass** die ABS-Einheit (14) an einer Seite der Längs-Symmetrieebene des Motorrades angeordnet ist und eine Motor-Steuereinheit (16) an der anderen Seite der Längs-Symmetrieebene angeordnet ist.

8. Motorrad nach Anspruch 7, **dadurch gekennzeichnet, dass** ein vorderes Ende der Motor-Steuereinheit (16) weiter vorn angeordnet ist als ein hinteres Ende der ABS-Einheit (14).

9. Motorrad nach einem der Ansprüche 1 bis 8, **dadurch gekennzeichnet, dass** ein oberes Ende der ABS-Einheit (14) höher angeordnet ist als ein unteres Ende der Batterie (15) und **dadurch**, dass ein Gehäuseabschnitt so ausgebildet ist, dass er einen hinteren Abschnitt und einen unteren Abschnitt der ABS-Einheit (14) abdeckt.

10. Motorrad nach einem der Ansprüche 1 bis 9, **dadurch gekennzeichnet, dass** das Motorrad eine Fahrzeugkarosserie-Verkleidung (7) umfasst, die eine vordere Verkleidung (7a), die das Kopfrohr (2a) von der Vorderseite her abdeckt, und einen Beinschutz (7b) umfasst, der das Kopfrohr (2a) von hinten abdeckt, und **dadurch**, dass sich die Batterie (15) sowie die ABS-Einheit (14) in einem Raum (A) befinden, der durch die vordere Abdeckung (7a) und dem Beinschutz (7b) gebildet wird.

## Revendications

1. Motocyclette (1), comportant :
un châssis (2) comportant un tube avant (2a) supportant une fourche avant ; une batterie (15) et une unité ABS (14) supportées par ledit châssis (2), dans lequel ladite unité ABS (14) est disposée sur une face latérale dudit tube avant (2a), selon une vue de dessus,
**caractérisée en ce que**
ladite batterie (15) est disposée face audit tube avant (2a), selon une vue de dessus, et **en ce que** certaines parties, au moins, de ladite unité ABS (14) sont positionnées davantage vers l'avant dudit tube avant (2a) afin de chevaucher ledit tube avant (2a), selon une vue d'une face latérale de ladite motocyclette.

2. Motocyclette selon la revendication 1, **caractérisée en ce que** ladite batterie (15) et ladite unité ABS (14) se chevauchent au moins partiellement, selon une vue d'une face latérale de ladite motocyclette.

3. Motocyclette selon l'une des revendications 1 et 2, **caractérisée en ce que** ladite motocyclette comporte au moins un support, fixé audit tube avant (2a) et supportant ladite batterie (15) et ladite unité ABS (14) .

4. Motocyclette selon la revendication 3, **caractérisée en ce que** ladite motocyclette comporte un premier support de batterie (17), fixé audit tube avant (2a), et supportant ladite batterie (15), et au moins un second support ABS (18), fixé audit tube avant (2a) et supportant ladite unité ABS.

5. Motocyclette selon l'une des revendications 3 et 4, **caractérisé en ce que** l'un, au moins, desdits supports est fixé, tout en restant démontable, audit tube avant (2a).

6. Motocyclette selon l'une des revendications 4 et 5, **caractérisée en ce que** ledit premier support de batterie (17) comporte une partie de liaison de tube avant, fixée audit tube avant (2a) sur une face opposée à ladite unité ABS (14).

7. Motocyclette selon l'une des revendications 1 à 6, **caractérisée en ce que** ladite unité ABS (14) est disposée sur une face du plan longitudinal de symétrie de ladite motocyclette, et **en ce qu'**une unité de commande de moteur (16) est disposée sur l'autre face dudit plan longitudinal de symétrie.

8. Motocyclette selon la revendication 7, **caractérisée en ce qu'**une extrémité avant de ladite unité de commande de moteur (16) est disposée davantage vers l'avant qu'une extrémité arrière de ladite unité ABS (14).

9. Motocyclette selon l'une des revendications 1 à 8, **caractérisée en ce qu'**une extrémité supérieure de ladite unité ABS (14) est positionnée plus haut qu'une extrémité inférieure de ladite batterie (15), et **en ce qu'**une partie de boîtier est adaptée pour couvrir une partie arrière et une partie inférieure de ladite unité ABS (14).

10. Motocyclette selon l'une des revendications 1 à 9, **caractérisée en ce que** ladite motocyclette comprend un capot de châssis de véhicule (7) comportant un capot avant (7a) recouvrant ledit tube avant (2a) depuis la face avant, et un protège-jambes (7b) recouvrant le tube avant (2a) depuis l'arrière, et **en ce que** ladite batterie (15) et ladite unité ABS (14) sont situées dans un espace (A) défini par ledit capot avant (7a) et ledit protège-jambes (7b).
